(19) Europäisches Patentamt
European Patent Office
Office européen des brevets

(11) **EP 2 579 491 A2**

(12) **EUROPEAN PATENT APPLICATION**
published in accordance with Art. 153(4) EPC

(43) Date of publication:
**10.04.2013 Bulletin 2013/15**

(51) Int Cl.:
*H04J 11/00* (2006.01)    *H04B 7/26* (2006.01)
*H04W 72/04* (2009.01)    *H04L 1/16* (2006.01)

(21) Application number: **11792659.2**

(22) Date of filing: **07.06.2011**

(86) International application number:
**PCT/KR2011/004140**

(87) International publication number:
**WO 2011/155748 (15.12.2011 Gazette 2011/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.06.2010 US 352338 P
07.06.2010 US 351932 P**

(71) Applicant: **LG Electronics Inc.
Yeongdeungpo-gu
Seoul 150-721 (KR)**

(72) Inventors:
• **HAN, Seunghee
Anyang-si
Gyeonggi-do 431-080 (KR)**
• **LEE, Moonil
Anyang-si
Gyeonggi-do 431-080 (KR)**

• **MOON, Sungho
Anyang-si
Gyeonggi-do 431-080 (KR)**
• **CHUNG, Jaehoon
Anyang-si
Gyeonggi-do 431-080 (KR)**
• **NOH, Minseok
Anyang-si
Gyeonggi-do 431-080 (KR)**
• **KO, Hyunsoo
Anyang-si
Gyeonggi-do 431-080 (KR)**

(74) Representative: **Katérle, Axel
Wuesthoff & Wuesthoff
Patent- und Rechtsanwälte
Schweigerstraße 2
81541 München (DE)**

(54) **METHOD AND APPARATUS FOR TRANSMITTING CONTROL INFORMATION IN A WIRELESS COMMUNICATION SYSTEM**

(57)    The present invention relates to a wireless communication system. More particularly, the present invention relates to a method for transmitting control information in a wireless communication system and to an apparatus for the method, wherein the method comprises a step of receiving a plurality of scheduling information for transmission using a plurality of physical uplink shared channels (PUSCHs), and a step of transmitting uplink control information. (UCI) through one PUSCH among the plurality of PUSCHs, if the transmission using the plurality of PUSCHs is present in the subframe which requires a UCI transmission. If a PUSCH transmission is present on a primary resource in the subframe, the UCI is transmitted through the PUSCH of the primary resource. If a PUSCH transmission is not present on the primary resource in the subframe, the UCI is transmitted through the PUSCH of the secondary resource having the smallest index among a plurality of secondary resources on which PUSCH transmissions are present.

FIG. 27

EP 2 579 491 A2

## Description

## Technical Field

The present invention relates to a wireless communication system, and more particularly, to a method and apparatus for transmitting control information. The wireless communication system may support carrier aggregation (CA).

## Background Art

A wireless communication system has been widely developed to provide various kinds of communication services such as voice and data. Generally, the wireless communication system is a multiple access system that can support communication with multiple users by sharing available system resources (bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

## Disclosure

## Technical Problem

An object of the present invention devised to solve the conventional problem is to provide a method for efficiently transmitting control information in a wireless communication system and an apparatus for the same. Another object of the present invention is to provide a method for efficiently allocating a resource for transmission of control information and an apparatus for the same.

It will be appreciated by persons skilled in the art that the objects that could be achieved with the present invention are not limited to what has been particularly described hereinabove and the above and other objects that the present invention could achieve will be more clearly understood from the following detailed description.

## Technical Solution

To solve the aforementioned technical problems, in one aspect of the present invention, a method for transmitting control information by a user equipment in a wireless communication system comprises the steps of receiving a plurality of scheduling information for transmission of a plurality of physical uplink shared channels (PUSCHs); and transmitting uplink control information (UCI) through one PUSCH among the plurality of PUSCHs, if the transmission of the plurality of PUSCHs is present in a subframe which requires UCI transmission, wherein, if there is a PUSCH transmission on a primary resource in the subframe, the UCI is transmitted through the PUSCH of the primary resource, and wherein, if there is no PUSCH transmission on the primary resource in the subframe, the UCI is transmitted through the PUSCH of the secondary resource having the smallest index among a plurality of secondary resources on which PUSCH transmissions are present.

In another aspect of the present invention, a user equipment configured to transmit control information in a wireless communication system comprises a radio frequency (RF) unit; and a processor, wherein the processor configured to receive a plurality of scheduling information for transmission of a plurality of physical uplink shared channels (PUSCHs), and transmit uplink control information (UCI) through one PUSCH among the plurality of PUSCHs, if the transmission of the plurality of PUSCHs is present in a subframe which requires UCI transmission, and if there is a PUSCH transmission on a primary resource in the subframe, the UCI is transmitted through the PUSCH of the primary resource, and if there is no PUSCH transmission on the primary resource in the subframe, the UCI is transmitted through the PUSC of the secondary resource having the smallest index among a plurality of secondary resources on which PUSCH transmissions are present.

Preferably, the primary resource corresponds to a primary component carrier (PCC), and the secondary resource corresponds to a secondary component carrier (SCC).

Preferably, the UCI includes at least one of periodic channel status information (CSI) and acknowledgement/negative acknowledgement (ACK/NACK).

Preferably, the index is a logical index used for CC identification, and is configured through radio resource control (RRC) signaling.

Preferably, the UCI is transmitted through a physical uplink control channel (PUCCH) if the subframe, which requires the UCI transmission, is different from the subframe where the transmission of the plurality of PUSCHs is present.

## Advantageous Effects

According to the present invention, control information may be transmitted efficiently in a wireless communication system.

It will be appreciated by persons skilled in the art that that the effects that could be achieved with the present invention are not limited to what has been particularly described hereinabove and other advantages of the present invention will be more clearly understood from the following detailed description.

## Brief Description of the Drawings

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a diagram illustrating physical channels used in a 3rd generation partnership project long term evolution (3GPP) system, which is an example of a wireless communication system, and a general method for transmitting a signal using the physical channels;

FIG. 2 is a diagram illustrating a signal processing procedure for transmitting an uplink signal;

FIG. 3 is a diagram illustrating a signal processing procedure for transmitting a downlink signal;

FIG. 4 is a diagram illustrating an SC-FDMA system and an OFDMA system;

FIG. 5 is a diagram illustrating a signal mapping system on a frequency domain for satisfying single carrier properties;

FIG. 6 is a diagram illustrating a signal processing procedure in which DFT process output samples are mapped into a single carrier in a clustered SC-FDMA;

FIG. 7 and FIG. 8 are diagrams illustrating a signal processing procedure in which DFT process output samples are mapped into multiple carriers in a clustered SC-FDMA;

FIG. 9 is a diagram illustrating a signal processing procedure in segment SC-FDMA;

FIG. 10 is a diagram illustrating a structure of an uplink subframe;

FIG. 11 is a diagram illustrating a procedure of processing UL-SCH data and control information;

FIG. 12 is a diagram illustrating multiplexing of control information and UL-SCH data on a PUSCH;

FIG. 13 to FIG. 15 are diagrams illustrating multiplexing of control information and UL-SCH data in a multiple input multiple output (MIMO) system ;

FIG. 16 is a diagram illustrating a concept of downlink component carriers managed by a base station;

FIG. 17 is a diagram illustrating a concept of uplink component carriers managed by a user equipment;

FIG. 18 is a diagram illustrating a concept of multiple carriers managed by one MAC layer of a base station;

FIG. 19 is a diagram illustrating a concept of multiple carriers managed by one MAC layer of a user equipment;

FIG. 20 is a diagram illustrating a concept of multiple carriers managed by a plurality of MAC layers of a base station;

FIG. 21 is a diagram illustrating a concept of multiple carriers managed by a plurality of MAC layers of a user equipment;

FIG. 22 is another diagram illustrating a concept of multiple carriers managed by a plurality of MAC layers of a base station;

FIG. 23 is another diagram illustrating a concept of multiple carriers managed by a plurality of MAC layers of a user equipment;

FIG. 24 is a diagram illustrating asymmetric carrier aggregation where a plurality of DL CCs are linked with one UL CC;

FIG. 25 to FIG. 31 are diagrams illustrating UCI piggyback scenario according to the embodiments of the present invention; and

FIG. 32 is a diagram illustrating a base station and a user equipment that may be applied to the present invention.

**Best Mode for Carrying Out the Invention**

The following technology may be used for various wireless access systems such as CDMA (code division multiple access), FDMA (frequency division multiple access), FDMA (time division multiple access), OFDMA (orthogonal frequency division multiple access), and SC-FDMA (single carrier frequency division multiple access). The CDMA may be implemented by the radio technology such as universal terrestrial radio access (ULTRA) or CDMA2000. The TDMA may be implemented by the radio technology such as global system for mobile communication (GSM)/general packet radio service (GPRS)/enhanced data rates for GSM evolution (EDGE). The OFDMA may be implemented by the radio technology such as IEEE 802.11 (Wi-Fi), IEEE 802.16 (WiMAX), IEEE 802.20, and evolved UTRA (E-UTRA). The UTRA is a part of a universal mobile telecommunications system (UMTS). A 3rd generation partnership project long term evolution (3GPP LTE) communication system is a part of an evolved UMTS (E-UMTS) that uses E-UTRA, and uses OFDMA in a downlink while uses SC-FDMA in an uplink. LTE-advanced (LTE-A) is an evolved version of the 3GPP LTE system. Although the following description will be based on the 3GPP LTE/LTE-A to clarify description of technical features, it is to be understood that the present invention is not limited to the 3GPP LTE/LTE-A.

In a wireless communication system, a user equipment may receive information from a base station through a downlink (DL), and may also transmit information to the base station through an uplink. Examples of information transmitted from and received between the user equipment and the base station include data and various kinds of control information. Various physical channels exist depending on types and usage of information transmitted from or received between the user equipment and the base station.

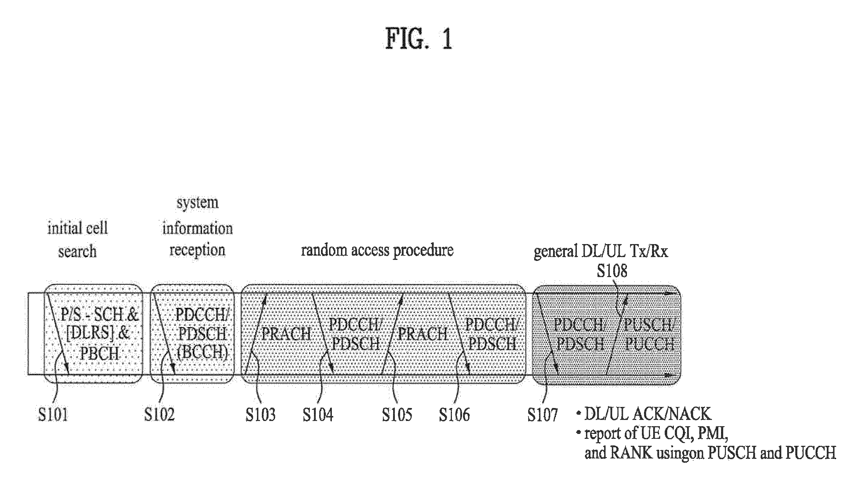

FIG. 1 is a diagram illustrating physical channels used in a 3rd generation partnership project long term evolution (3GPP) system, which is an example of a mobile communication system, and a general method for transmitting a signal using the physical channels.

A user equipment performs initial cell search such as synchronizing with a base station when it newly enters a cell or the power is turned on, at step S101. To this end, the user equipment may synchronize with the base station by receiving a primary synchronization channel (P-SCH) and a secondary synchronization channel (S-SCH) from the base station, and may acquire information of cell ID, etc. Afterwards, the user equipment may acquire broadcast information within a cell by receiving a physical broadcast channel from the base station. Meanwhile, the user equipment may identify the channel status of a downlink by receiving a downlink reference signal (DL RS) in the initial cell search step.

The user equipment which has finished the initial cell search may acquire more detailed system information by receiving a physical downlink control channel (PDCCH) and a physical downlink control channel (PDSCH) based on the physical downlink control channel information, at step S102.

Afterwards, the user equipment may perform a random access procedure (RACH) for the base station, such as step S103 to S106, to completely access the base station. To this end, the user equipment may transmit a preamble through a random physical random access channel (PEACH) (S103), and may receive a response message to the preamble through the PUCCH and a PUSCH corresponding to the PUCCH (S104). In case of contention based random access, a contention resolution procedure such as trans mission (S105) of additional PEACH and reception (S106) of the PDCCH and the PDSCH corresponding to the PUCCH may be performed.

The user equipment which has performed the aforementioned steps may receive the PDCCH/PDSCH (S107) and transmit a physical uplink shared channel (PUSCH) and a physical uplink control channel (PUCCH) (S108), as a general procedure of transmitting uplink/downlink signals. The control information transmitted from the user equipment to the base station will be referred to as uplink control information (UCI). The UCI includes hybrid automatic repeat and request acknowledgement/negative acknowledgement (HARQ ACK/NACK), a scheduling request (SR), a channel quality indicator (CQI), a precoding matrix index (PMI), and a rank indicator (RI). Although the UCI is generally transmitted through the PUCCH, it may be transmitted through the PUSCH if control information and traffic data should be transmitted at the same time. Also, the UCI may be transmitted non-periodically through the PUSCH in accordance with a request/command of a network.

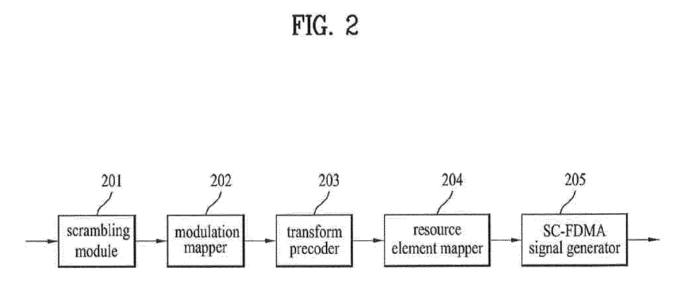

FIG. 2 is a diagram illustrating a signal processing procedure for transmitting an uplink signal from a user equipment.

A scrambling module 210 of a user equipment may scramble transmitting signals by using a user equipment specific scrambling signal to transmit an uplink signal. The scrambled signals are input to a modulation mapper 220 and are modulated into complex symbols by a binary phase shift keying (BPSK) mode, a quadrature phase shift keying (QPSK) mode, or a 16 quadrature amplitude modulation (QAM)/64 QAM mode depending on types of the transmitting signals and/or the channel status. Afterwards, the modulated complex symbols are processed by a conversion precoder 230 and then input to a resource element mapper 240. The resource element mapper 240 may map the complex symbols into time-frequency resource elements. The processed signals may be transmitted to the base station through an antenna after passing through an SC-FDMA signal generator 250.

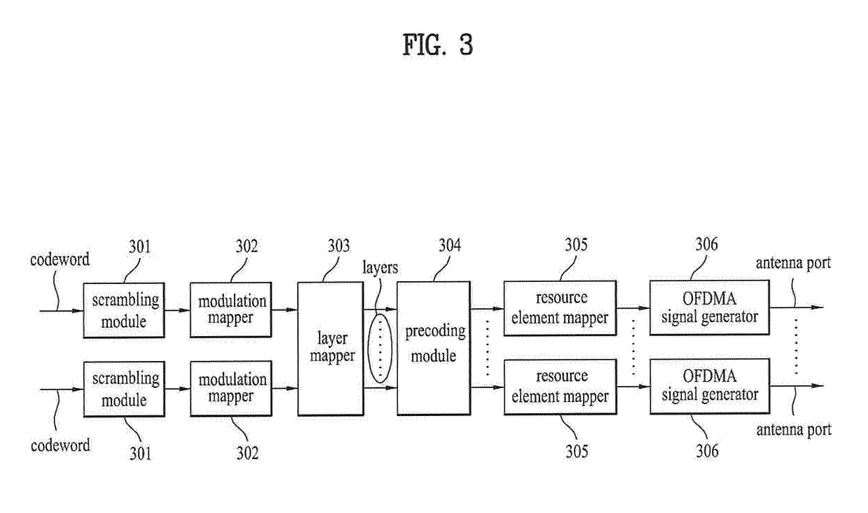

FIG. 3 is a diagram illustrating a signal processing procedure for transmitting a downlink signal from a base station.

In the 3GPP LTE system, the base station may transmit one or more codewords to the downlink. The one or more codewords may be processed as complex symbols through a scrambling module 301 and a modulation mapper 302 in the same manner as the uplink of FIG. 2. Afterwards, the complex symbols are mapped into a plurality of layers by a layer mapper 303, wherein each layer may be multiplied by a predetermined precoding matrix through a precoding module 304 and then may be allocated to each transmitting antenna. The transmitting signals per antenna, which are processed as above, are mapped into time-frequency resource elements by a resource element mapper 305. Afterwards, the processed signals may be transmitted through each antenna after passing through an OFDM signal generator 306.

If the user equipment transmits a signal to the uplink in the wireless communication system, a peak-to-average-ratio (PAPR) ratio may cause a problem as compared with that the base station transmits a signal to the downlink. Accordingly, as described with reference to FIG. 2 and FIG. 3, SC-FDMA (Single Carrier-Frequency Division Multiple Access) system is used for uplink signal transmission unlike OFDMA system used for downlink signal transmission.

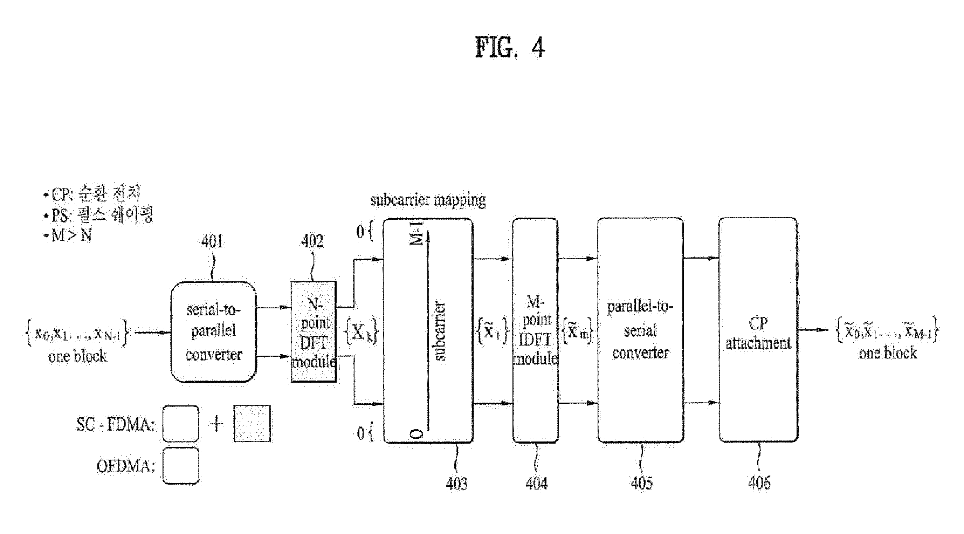

FIG. 4 is a diagram illustrating an SC-FDMA system and an OFDMA system for downlink signal transmission. The 3GPP system uses OFDMA on the downlink and SC-FDMA on the uplink.

Referring to FIG. 4, each of a user equipment for uplink signal trans mission and a base station for downlink signal transmission includes a serial-to-parallel converter 401, a subcarrier mapper 403, an M-point IDFT module 404, and a cyclic prefix (CP) addition module 406. However, the user equipment for signal transmission based on the SC-FDMA system further includes a parallel-to-serial converter 405 and an N-point DFT module 402. The N-point DFT module 402 offsets IDFT processing effect of M-point IDFT module 404 as much as a predetermined portion, whereby the transmitting signals have single carrier properties.

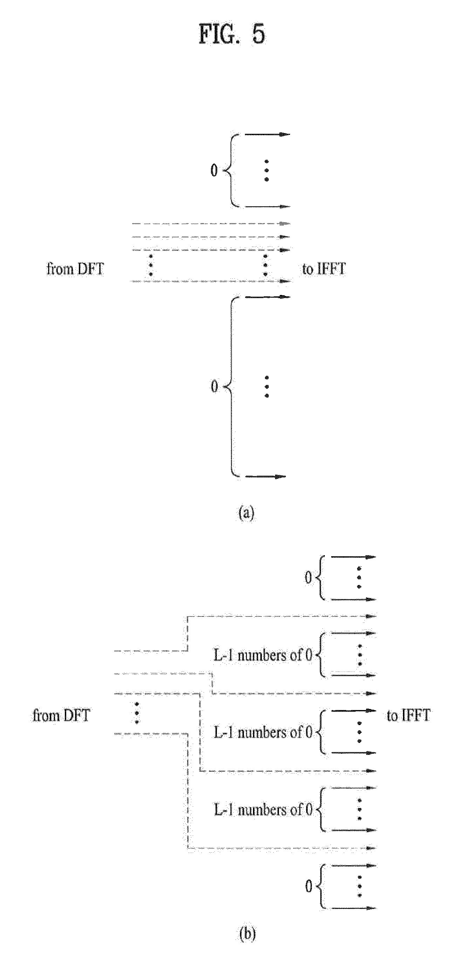

FIG. 5 is a diagram illustrating a signal mapping system on a frequency domain for satisfying single carrier properties in the frequency domain. In FIG. 5, (a) illustrates a localized mapping system, and (b) illustrates a distributed mapping system.

A clustered SC-FDMA which is a corrected type of SC-FDMA will be described. The clustered SC-FDMA divides DFT process output samples into sub-groups during a subcarrier mapping procedure, and maps the DFT process output samples into a frequency domain (or subcarrier domain) discontinuously.

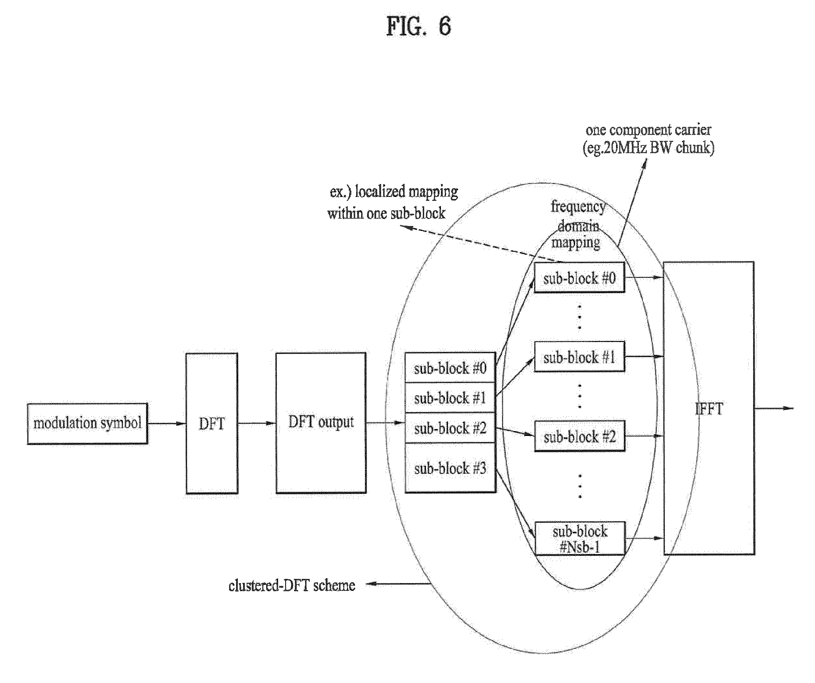

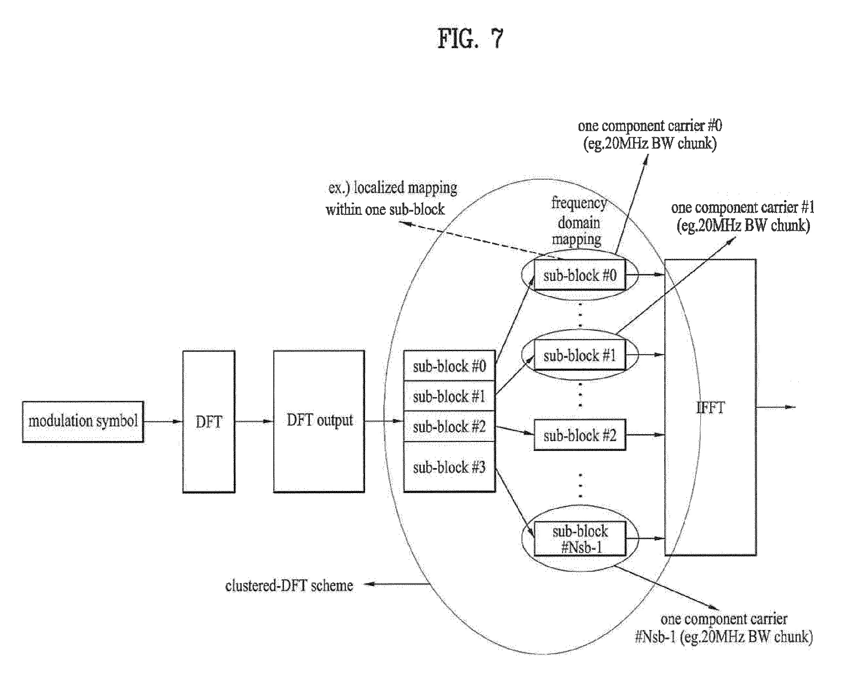

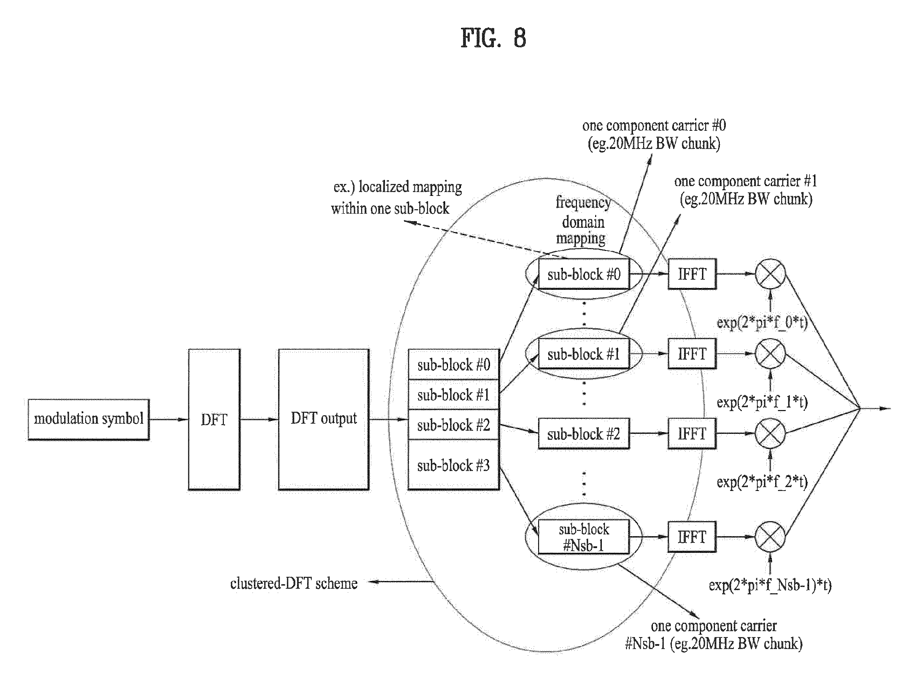

FIG. 6 is a diagram illustrating a signal processing procedures for mapping DFT output samples into a single carrier in a clustered SC-FDMA. Also, FIG. 7 and FIG. 8 are diagrams illustrating a signal processing procedure for mapping DFT process output samples into multiple carriers in a clustered SC-FDMA. FIG. 6 illustrates an example that clustered SC-FDMA is used for intra-carrier, and FIG. 7 and FIG. 8 illustrate examples that clustered SC-FDMA is used for inter-carrier. Also, in FIG. 7, a signal is generated through a single IFFT block if subcarrier spacing is aligned between adjacent component carriers in a state that contiguous component carriers are allocated in a frequency domain. In FIG. 8, a signal is generated through a plurality of IFFT blocks as component carriers are not adjacent to one another in a state that non-contiguous component carriers are allocated in a frequency domain.

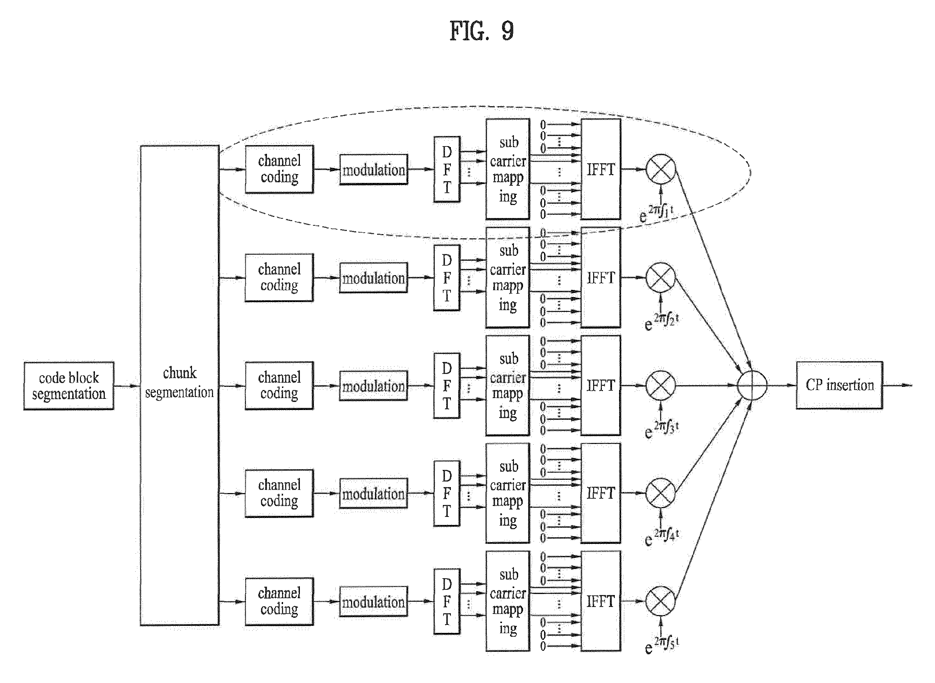

FIG. 9 is a diagram illustrating a signal processing procedure in segmented SC-FDMA system.

As a number of IFFTs equivalent to a random number of DFTs are used, DFT and IFFT have one-to-one correspondence relation, whereby DFT spreading of the existing SC-FDMA and frequency subcarrier mapping of IFFT are extended. In this case, NxSC-FDMA or NxDFT-s-OFDMA may be expressed. In the present invention, NxSC-FDMA or NxDFT-s-OFDMA may be referred to as segmented SC-FDMA. Referring to FIG. 9, the segmented SC-FDMA system is characterized in that DFT process is performed in a group unit by grouping all time domain modulation symbols into N groups (N is an integer greater than 1) so as to relieve a condition of single carrier properties.

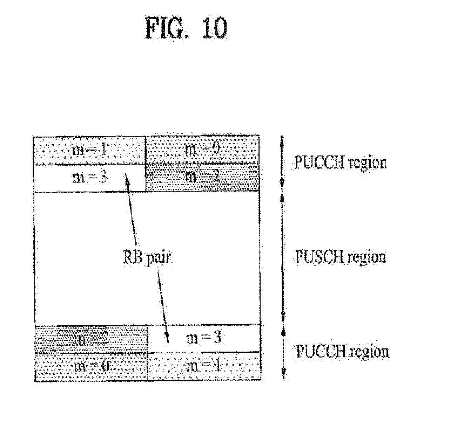

FIG. 10 is a diagram illustrating a structure of an uplink subframe.

Referring to FIG. 10, the uplink subframe includes a plurality of slots (for example, two). Each slot may include a plurality of SC-FDMA symbols, wherein the number of SC-FDMA symbols included in each slot is varied depending on a cyclic prefix (CP) length. For example, in case of normal CP, the slot may include seven SC-FDMA symbols. The uplink subframe is divided into a data region and a control region. The data region includes a PUSCH, and is used to transmit a data signal such as voice. The control region includes a PUCCH, and is used to transmit control information. The PUCCH includes RB pair (for example, m=0,1,2,3) (for example, frequency mirrored RB pair) located at both ends of the data region on a frequency axis, and performs hopping on the border of the slots. The uplink control information (UCI) includes HARQ ACK/NACK, CQI, PMI, and RI.

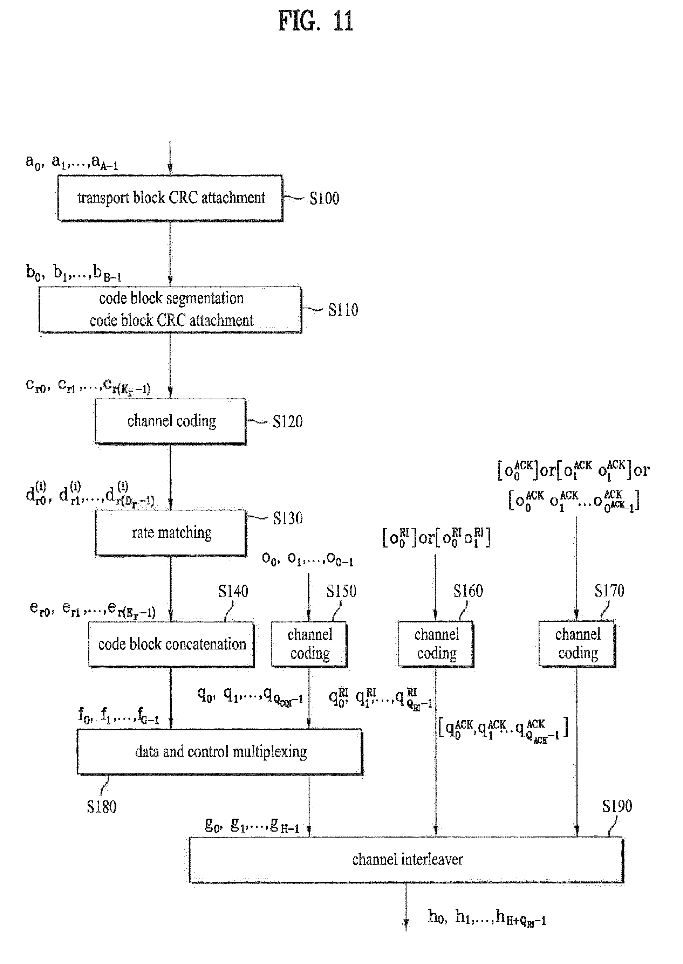

FIG. 11 is a diagram illustrating a procedure of processing UL-SCH data and control information.

Referring to FIG. 11, error detection is provided to a UL-SCH transmission block through cyclic redundancy check (CRC) attachment (S100).

A full transmission block is used to calculate CRC parity bits. Bits of the transmission block are $a_0, a_1, a_2, a_3,...,a_{A-1}$. The parity bits are $p_0, p_1, p_2, p_2, p_3,...,p_{L-1}$. The size of the transmission block is A, and the number of parity bits is L.

After the transmission block CRC attachment, code block segmentation and code block CRC attachment are performed (S110). Bit inputs for code block segmentation are $b_0, b_1, b_2, b_3,...,b_{B-1}$. B is the number of bits of the transmission block (including CRC). Bits after code block segmentation are $c_{r0}, c_{r1}, c_{r2}, c_{r3},...,c_r(K_r-1)$. 'r' is a code block number (r=0, 1, ..., C-1), and 'Kr' is the number of bits for the code block r.

Channel coding is performed after code block segmentation and code block CRC (S120). Bits after channel coding are $d_{r0}^{(i)}, d_{r1}^{(i)}, d_{r2}^{(i)}, d_{r3}^{(i)},...,d_{r(D_r-1)}^{(i)}$, i=0,

1, 2, and '$D_r$' represents the number of bits of the ith coded streams for the code block 'r' (that is, $D_r = K_r + 4$). 'r' represents the code block number (r=0, 1, ..., C-1), and represents the number of bits of the code block 'r'. 'C' represents a total number of code blocks. Turbo coding may be used for channel coding.

Rate matching is performed after channel coding (S130). Bits after rate matching are $e_{r0}, e_{r1}, e_{r2}, e_{r3},..., e_r(E_{r-1})$. $E_r$ is the number of rate matched bits for the rth code block. 'r=0, 1, ..., C-1, and 'C' represents a total number of code blocks.

Code block connection is performed after rate matching (S140). Bits after code block connection are $f_0, f_1, f_2, f_3,...,f_{G-1}$. G is a total number of coded bits for transmission. When control information is multiplexed with UL-SCH transmission, bits used for control information transmission is not included in G. $f_0, f_1, f_2, f_3,...,f_{G-1}$ corresponds to UL-SCH codewords.

In case of uplink control information, channel coding of channel quality information (CQI and/or PMI), RI and HARQ-ACK is performed independently. Channel coding of UCI is performed on the basis of the number of coded symbols for each of control information. For example, the coded symbols may be used for rate matching of coded control information. The number of coded symbols corresponds to the number of modulated symbols, the number of REs, etc. in the later process.

Channel coding of channel quality information is performed using input sequences $o_0, o_1, o_2,...,o_{O-1}$ (S150). Output bit sequences for channel coding for channel quality information are $q_0, q_1, q_2, q_3,...q_{Q_{CQI}-1}$. The channel coding scheme is varied depending on bits of channel quality information. Also, if the channel quality information is more than 11 bits, CRC bits are added thereto. $Q_{CQI}$ represents a total of coded bits. In order to adjust a length of bit sequence to $Q_{CQI}$, the coded channel quality information may be rate-matched. $Q_{CQI} = Q'_{CQI} \times Q_m$, $Q'_{CQI}$ is the number of coded symbols for CQI, and $Q_m$ is a modulation order. $Q_m$ is set equally to UL-SCH data.

Channel coding of RI is performed using input sequence $[o_0^{RI}]$ or $[o_0^{RI}\ o_1^{RI}]$ (S160). $[o_0^{RI}]$ and $[o_0^{RI}\ o_1^{RI}]$ respectively mean 1-bit RI and 2-bit RI.

In case of 1-bit RI, repetition coding is used. In case of 2-bit RI, simplex code (3, 2) is used, and encoded data may be repeated cyclically. The output bit sequences $q_0^{RI}, q_1^{RI}, q_2^{RI}, ..., q_{Q_{RI}-1}^{RI}$ are obtained by combination of coded RI block(s). $Q_{RI}$ represents a total number of coded bits. In order to adjust a length of the coded RI to $Q_{RI}$, the coded RI block which is finally combined may be a part (that is, rate matching). $Q_{RI} = Q'_{RI} \times Q_m$, $Q'_{RI}$ is the number of coded symbols for RI, and $Q_m$ is a modulation order. $Q_m$ is set equally to UL-SCH data.

Channel coding of HARQ-ACK is performed by input sequence $[o_0^{ACK}]$,

$$[o_0^{ACK}\ o_1^{ACK}] \quad \text{or} \quad [o_0^{ACK}\ o_1^{ACK} \cdots o_{O^{ACK}-1}^{ACK}] \text{of step}$$

S170. $[o_0^{ACK}]$ and $[o_0^{ACK}\ o_1^{ACK}]$ respectively mean 1-bit HARQ-ACK and 2-bit HARQ-ACK. Also, $[o_0^{ACK}\ o_1^{ACK} \cdots o_{O^{ACK}-1}^{ACK}]$ means HARQ-ACK configured by information of two bits or more (that is, $O^{ACK} > 2$). ACK is coded to 1, and NACK is coded to 0. In case of 1-bit HARQ-ACK, repetition coding is used. In case of 2-bit HARQ-ACK, simplex code (3, 2) is used, and encoded data may be repeated cyclically. $Q_{ACK}$ represents a total number of coded bits. The bit sequences $q_0^{ACK}, q_1^{ACK}, q_2^{ACK}, ..., q_{Q_{ACK}-1}^{ACK}$ are obtained by combination of coded HARQ-ACK block(s). In order to adjust a length of the bit sequence to $Q_{ACK}$, the coded HARQ-ACK block which is finally combined may be a part (that is, rate matching). $Q_{ACK} = Q'_{ACK} \times Q_m$, $Q'_{ACK}$ is the number of coded symbols for HARQ-ACK, and $Q_m$ is a modulation order. $Q_m$ is set equally to UL-SCH data.

The inputs for data/control multiplexing blocks are $f_0, f_1, f_2, f_3, ...f_{G-1}$, which mean the coded UL-SCH bits, and $q_0', q_1, q_2, q_3, ...,q_{Q_{CQI}-1}$, which mean the coded CQI/PMI bits (S180). The outputs of the data/control multiplexing blocks are $g_0, g_1, g_2, g_3, \cdots, g_{H'-1}$. $g_i$ is a column vector of length $Q_m$ ($i=0,...,H'-1$). $H'=H/Q_m$, $H = (G + Q_{CQI})$, and H is a total number of coded bits allocated for UL-SCH data and CQI/PMI.

Channel interleaving is performed based on the

outputs $g_0, g_1, g_2, g_3, \cdots, g_{H'-1}$ of the data/control multiplexing blocks, coded rank indicators $\underline{q}_0^{RI}, \underline{q}_1^{RI}, \underline{q}_2^{RI}, ..., \underline{q}_{Q'_{RI}-1}^{RI}$ and coded HARQ-ACK $\underline{q}_0^{ACK}, \underline{q}_1^{ACK}, \underline{q}_2^{ACK}, ..., \underline{q}_{Q'_{ACK}-1}^{ACK}$ (S190). $\underline{g}_i$ is a column vector of length $Q_m$ for CQI/PMI, and $i = 0,..., H'$-$(H' = H / Q_m)$, $\underline{q}_i^{ACK}$ is a column vector of length $Q_m$ for ACK/NACK, and $i=0,...,Q'_{ACK}$-1 ($Q'_{ACK} = Q_{ACK}/Q_m$). $\underline{q}_i^{RI}$ is a column vector of length $Q_m$ for RI, and $i = 0,..., Q'_{RI}$-1 ($Q'_{RI}=Q_{RI}/Q_m$).

A channel interleaver multiplexes control information and UL-SCH data for PUSCH transmission. In more detail, the channel interleaver includes mapping of control information and UL-SCH data into a channel interleaver matrix corresponding to the PUSCH resource.

After channel interleaving is performed, bit sequences $h_0, h_1, h_2, ..., h_{H+Q_{RI}}$-1 read from the channel interleaver matrix through column-by-column are output. The read bit sequences are mapped on a resource grid. $H'' = H'+Q'_{RI}$ number of modulation symbols are transmitted through a subframe.

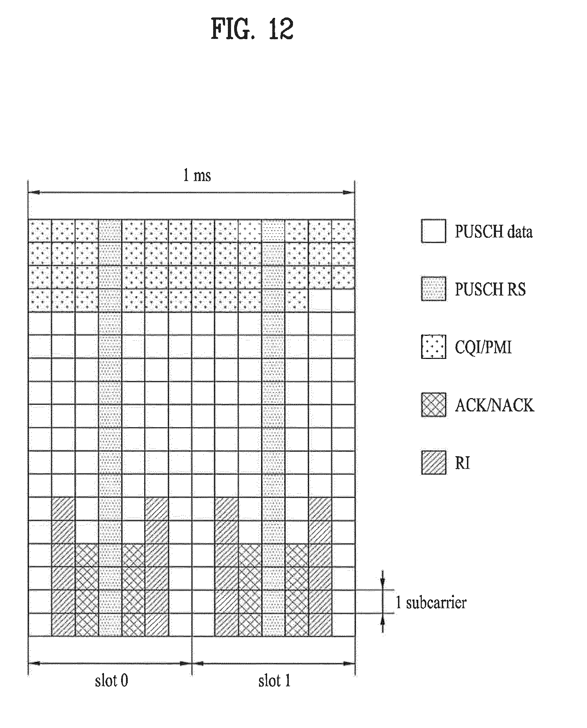

FIG. 12 is a diagram illustrating multiplexing of control information and UL-SCH data on a PUSCH. If transmission of control information is intended for the subframe where PUSCH transmission is allocated, the user equipment multiplexes the control information (UCI) and the UL-SCH data prior to DFT-spreading. The control information includes at least one of CQI/PMI, HARQ ACK/NACK and RI. The number of REs used for transmission of CQI/PMI, ACK/NACK and RI is based on modulation and coding scheme (MCS) and offset values $(\Delta_{\text{offset}}^{\text{CQI}}, \Delta_{\text{offset}}^{\text{HARQ-ACK}}, \Delta_{\text{offset}}^{\text{RI}})$ allocated for PUSCH transmission. The offset values allow different coding rates in accordance with the control information and are set semi-statically by higher layer (for example, RRC) signaling. The UL-SCH data and the control information are not mapped into the same RE. The control information is mapped to exist in two slots of the subframe. Since the base station may previously know that the control information will be transmitted through the PUSCH, it may easily demultiplex the control information and data packet.

Referring to FIG. 12, CQI and/or PMI(CQI/PMI) resources are located at a start part of UL-SCH data resources, and are sequentially mapped into all the SC-FDMA symbols on one subcarrier and then mapped on next subcarrier. CQI/PMI are mapped from the left to the right within the subcarrier, that is, to increase the SC-FDMA symbol index. The PUSCH data (UL-SCH data) are rate-matched considering the CQI/PMI resources (that is, the number of coded symbols). The same modulation order as that of the UL-SCH data is used for the CQI/PMI. If CQI/PMI information size (payload size) is small (for example, less than 11 bits), (32, k) block code is used for CQI/PMI information similarly to PUCCH transmission, and encoded data may be repeated cyclically. If the CQI/PMI information size is small, CRC is not used. If the CQI/PMI information size is great (for example, more than 11 bits), 8-bit CRC is added, and channel coding and rate matching are performed using a tail-biting convolutional code. The ACK/NACK is inserted into a part of SC-FDMA resources into which the UL-SCH data are mapped, through puncturing. The ACK/NACK is located next to the RS, and is filled from the bottom to the top within the corresponding SC-FDMA symbol, that is, to increase subcarrier index. In case of normal CP, SC-FDMA symbols for ACK/NACK are located at SC-FDMA symbols #2/#5 in each slot as shown. The coded RI symbol is located next to the symbols for ACK/NACK regardless of the fact that the ACK/NACK is actually transmitted for the subframe. The ACK/NACK, the RI and the CQI/PMI are coded independently.

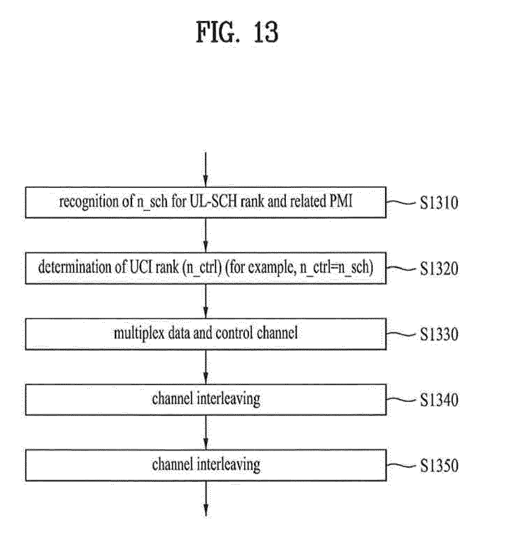

FIG. 13 is a diagram illustrating multiplexing of control information and UL-SCH data in a multiple input multiple output (MIMO) system.

Referring to FIG. 13, the user equipment identifies a rank (n_sch) for UL-SCH (data part) and PMI related to the rank from scheduling information for PUSCH transmission (S1310). Also, the user equipment determines a rank (n_ctrl) for UCI (S1320). The rank of the UCI may be set, but not limited to, equally to the rank of the UL-SCH (n_ctrl=n_sch). Afterwards, multiplexing of data and a control channel is performed (S1330). Afterwards, the channel interleaver performs time-first mapping of data/CQI and maps ACK/NACKI by puncturing surroundings of DM RS (S1340). Then, modulation of the data and the control channel is performed in accordance with MCS table (S1350). Examples of the modulation scheme include QPSK, 16QAM, and 64QAM. The order/location of the modulation blocks may be varied (for example, prior to multiplexing of data and control channel).

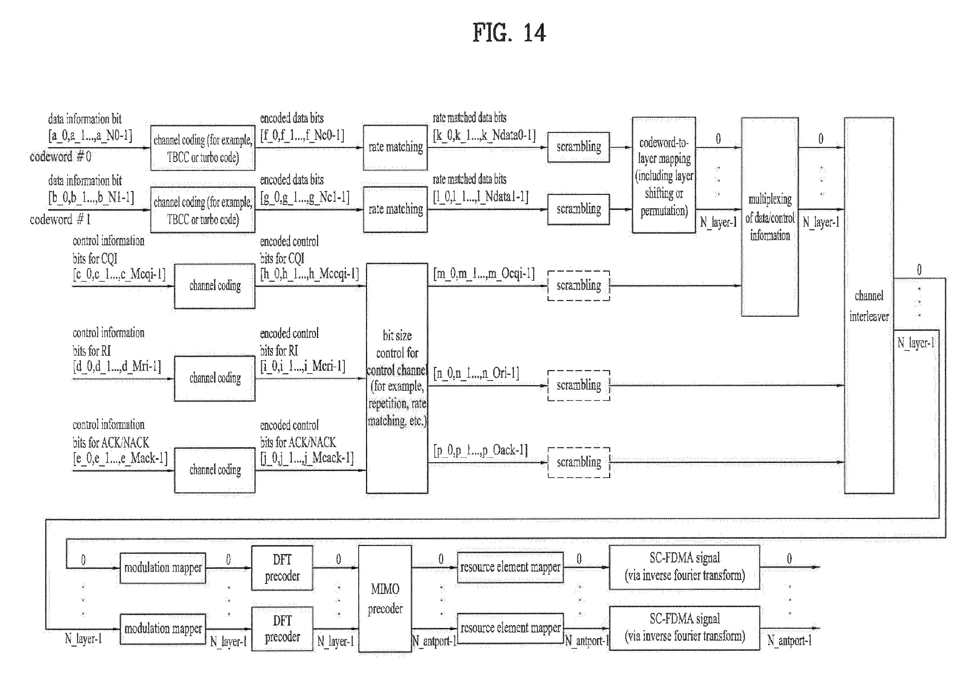

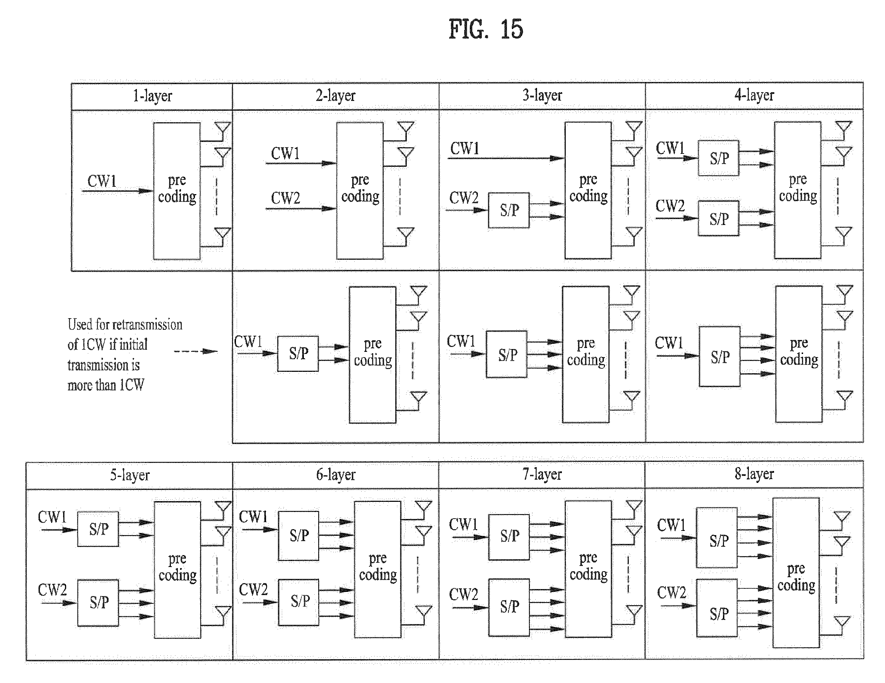

FIG. 14 and FIG. 15 illustrate an example of a plurality of UL-SCH transmission blocks and control information, which are multiplexed and transmitted in accordance with one embodiment of the present invention. Although it is assumed that two codewords are transmitted in FIG. 14 and FIG. 15, the present invention is not limited to the examples of FIG. 14 and FIG. 15. The codeword and the transmission block correspond to each other, and are used to refer to the same in this specification. Since the basic multiplexing procedure is the same as/similar to the description of FIG. 11 and FIG. 12, multiplexing related to MIMO will be described mainly.

Referring to FIG. 14 and FIG. 15, after channel coding, the respective codewords are rate-matched in accordance with a given MCS table. Then, the encoded bits are scrambled cell-specifically, UL-specifically, UE-specifically, and codeword-specifically. Afterwards, codeword-to-layer mapping is performed for the scrambled codewords. The codeword-to-layer mapping may include action such as layer shifting (or permutation), for example. An example of the codeword-to-layer mapping is shown in FIG. 15. The later operations are the same as/similar to the aforementioned operations except that the operations are performed in a unit of layer. However, in case of MIMO, MIMO precoding is applied to the output of DFT precoding. MIMO precoding serves to map/distribute layers (or virtual antenna) into physical antennas. MIMO precoding is performed using a precoding matrix, and may be performed in the order/location different from those of FIG. 15.

The UCI (for example, CQI, PMI, RI, ACK/NACK, etc.) is channel-coded independently in accordance with a given scheme. The number of encoded bits is controlled by a bit-size controller (hatching block). The bit-size controller may be included in the channel coding block. The bit-size controller may be operated as follows.

1. RI (n_rank_pusch) for PUSCH is identified.

2. n_rank_ctrl=n_rank_pusch is set such that the number of bits (n_bit-ctrl) for a control channel is extended to n_ext_ctrl=n_rank_ctrl*n_bit_ctrl.

A. As one method, the bits of the control channel may be extended by simple repetition. For example, supposing that the bits of the control channel are [a0 a1 a2 a3] (that is, n_bit_ctrl=4) and n_rank_pusch=2, the extended control channel bits may be [a0 a1 a2 a3 a0 a1 a2 a3] (that is, n_ext_ctr1=8).

B. As another method, a cyclic buffer may be used such that the bits of the control channel may reach n_ext_ctr1.

If the bit-size controller and the channel coding block are incorporated into one (for example, in case of CQI/PMI control channel), encoded bits may be generated through channel coding and rate matching may be performed in accordance with the existing LTE rule.

In addition to the bit-size controller, much more randomization may be provided to the layer by bit-level interleaving.

In the case that the rank of the control channel is limited equally to the rank of the data channel, it is advantageous in view of signaling overhead. If the rank of the data is different from that of the control channel, it is required to additionally signal PMI for the control channel. Also, if the same RI is used for the data and the control channel, it is advantageous to simplify a multiplexing chain. Accordingly, although effective rank of the control channel is 1, a rank actually used to transmit the control channel may be n_rank_pusch. In view of reception, after a MIMO decoder is applied to each layer, each LLR output is accumulated using maximum ratio combining (MRC).

CQI/PMI channel and data part of two codewords are multiplexed by a data/control multiplexing block. Afterwards, the channel interleaver performs time-fist mapping, and allows HARQ ACK/NACK information to exist in both slots of the subframe and to be mapped into surrounding resources of an uplink demodulation reference signal.

Afterwards, modulation, DFT precoding, MIMO precoding and RE mapping are performed for each of the layers.

At this time, layer specific scrambling may be added to ACK/NACK and RI which are distributed into all the layers. Also, piggyback may be performed for the UCI of the CQI/PMI by selecting a specific codeword.

Hereinafter, a carrier aggregation (CA) communication system will be described. A multicarrier system or carrier aggregation system refers to a system that together uses a plurality of carriers having a bandwidth smaller than that of a target broadband to support a broadband. When a plurality of carriers having a bandwidth smaller than that of the target band are aggregated, a bandwidth of carriers aggregated for backward compatibility with the system according to the related art may be limited to a bandwidth used in the system of the related art. For example, the LTE system according to the related art supports bandwidths of 1.4, 3, 5, 10, 15 and 20MHz, and the LTE-A system evolved from the LTE system may support a bandwidth greater than 20MHz by using the bandwidths only supported by the LTE system. Alternatively, the LTE-A system may support carrier aggregation by defining a new bandwidth regardless of the bandwidth used in the system according to the related art. Multicarrier refers to a terminology that may be used together with carrier aggregation and bandwidth aggregation. Also, carrier aggregation refers to both contiguous carrier aggregation and non-contiguous aggregation. The component carrier means a carrier frequency (or center carrier, center frequency) of an aggregated frequency band.

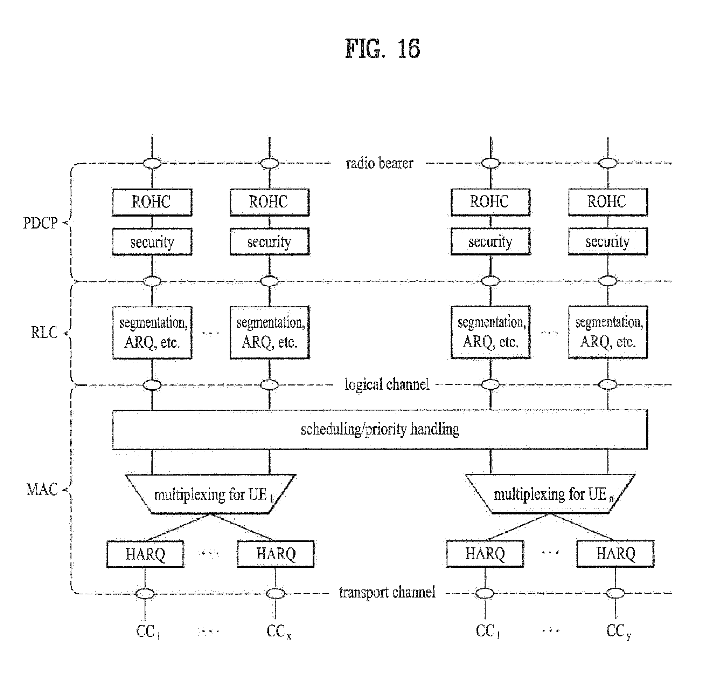

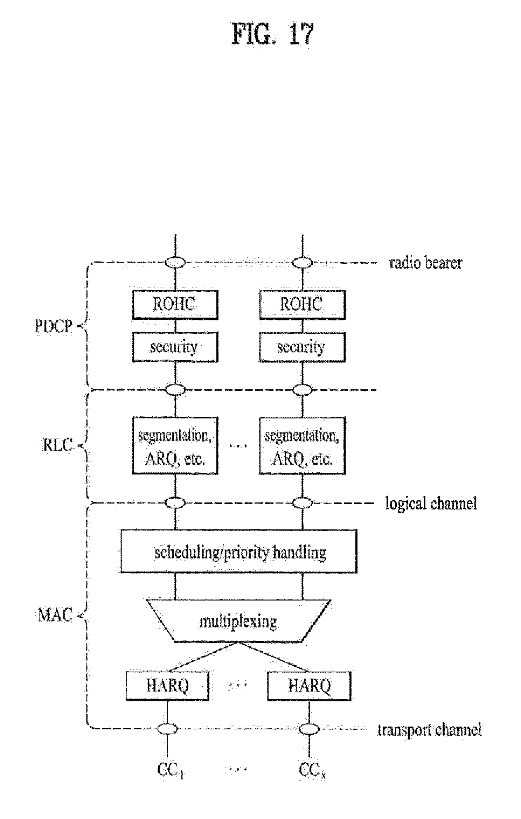

FIG. 16 is a diagram illustrating a concept of downlink component carriers managed by a base station, and FIG. 17 is a diagram illustrating a concept of uplink component carriers managed by a user equipment. For convenience of description, higher layers will be simplified as MAC layer.

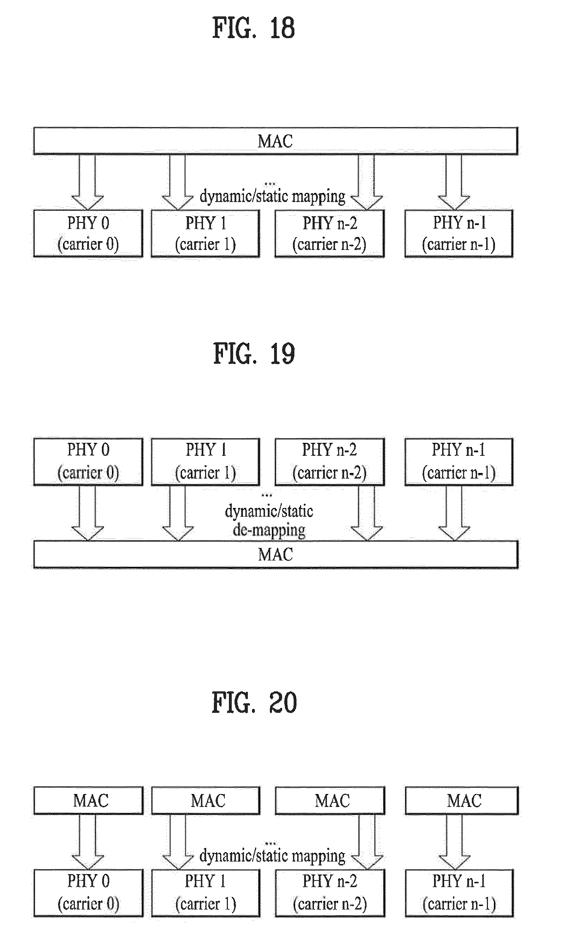

FIG. 18 is a diagram illustrating a concept of multiple carriers managed by one MAC layer of a base station, and FIG. 19 is a diagram illustrating a concept of multiple carriers managed by one MAC layer of a user equipment.

Referring to FIG. 18 and FIG. 19, one MAC layer performs transmission and reception by managing and operating one or more frequency carries. Since the frequency carriers managed by one MAC layer are not required to be contiguous with one another, it is advantageous in that the frequency carriers are more flexible in view of management of resources. In FIG. 18 and FIG. 19, one PHY layer means one component carrier. In this case, one PHY layer does not mean an independent radio frequency (RF) device necessarily. One independent RF device means, but is not limited to, one PHY layer, and may include several PHY layers.

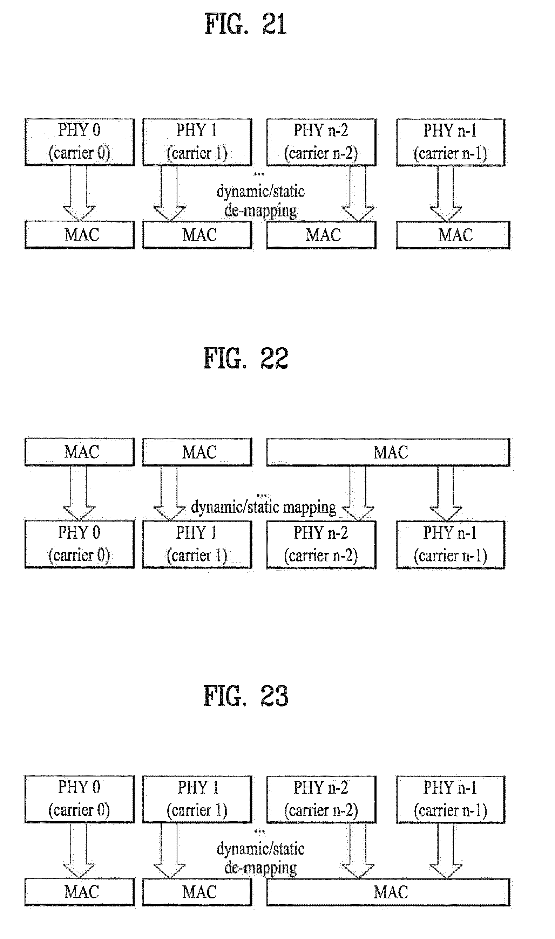

FIG. 20 is a diagram illustrating a concept of multiple carriers managed by a plurality of MAC layers of a base station. FIG. 21 is a diagram illustrating a concept of multiple carriers managed by a plurality of MAC layers of a user equipment. FIG. 22 is another diagram illustrating a concept of multiple carriers managed by a plurality of MAC layers of a base station. FIG. 23 is another diagram illustrating a concept of multiple carriers managed by a plurality of MAC layers of a user equipment.

In addition to the structure described with reference to FIG. 18 and FIG. 19, several carriers may be controlled by several MAC layers not one MAC layer, as shown in FIG. 20 to FIG. 23.

As shown in FIG. 20 and FIG. 21, each carrier may be controlled by each MAC layer at 1:1. As shown in FIG. 22 and FIG. 23, for some of carriers, each carrier may be controlled by each MAC layer at 1:1 and the other carriers more than one may be controlled by one MAC layer.

The system includes a plurality of carriers from 1 to N, wherein the respective carriers may be used contiguously or non-contiguously. This may be applied to the uplink/downlink without any classification. The TDD system is configured to manage N number of carriers including downlink and uplink transmission therein, and the FDD system is configured to use a plurality of carriers for each of the uplink and the downlink. The FDD system may support asymmetric carrier aggregation where the number of aggregated component carriers or the bandwidth of the carriers in the uplink is different from that in the downlink.

When the number of aggregated component carriers in the uplink is the same as that in the downlink, all the component carriers may be configured to be compatible with those of the existing system. However, it is to be understood that component carriers of which compatibility is not considered are not excluded from the present invention.

Hereinafter, it is assumed that a PDSCH is transmitted through a downlink component carrier #0 when a PDCCH is transmitted through the downlink component carrier #0. However, it will be apparent that the PDSCH may be transmitted through another downlink component carrier in accordance with cross-carrier scheduling.

The user equipment may use one of SC-FDMA scheme and a clustered DFT-s-OFDMA scheme during UL transmission. The transmission scheme may be applied to all the UL CCs equally, or may be applied to each UL CC independently.

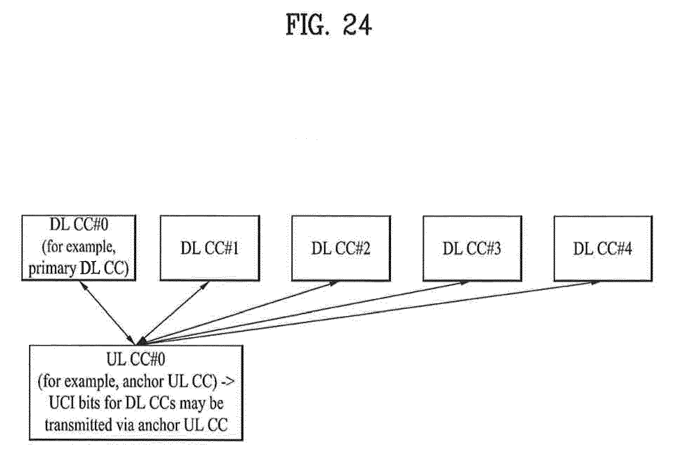

FIG. 24 is a diagram illustrating a scenario that UCI is transmitted in a wireless communication system in which carrier aggregation is supported. For example, the UCI may include HARQ ACK/NACK (A/N), channel status information (for example, CQI, PMI, RI), and scheduling request information (for example, SR).

FIG. 24 illustrates asymmetric carrier aggregation where five DL CCs are linked with one UL CC. The asymmetric carrier aggregation may be set in view of UCI transmission. In other words, DL CC-UL CC linkage for UCI may be set differently from DL CC-UL CC linkage for data. The control information (UCI) associated with a plurality of DL CCs may be restricted to be transmitted through one UL CC. For example, CQI/PMI/RI and ACK/NACK for a plurality of DL CCs may transmitted through a specific UL CC (for example, anchor UL CC) among a plurality of UL CCs. DL CC and UL CC may be referred to as DL cell and UL cell, respectively. Also, the anchor DL CC and the anchor UL CC may be referred to as DL primary CC (DL PCC) and UL primary CC (UL PCC), respectively.

The DL primary CC may be defined as DL CC linked with the UL primary CC. In this case, linkage includes both implicit linkage and explicit linkage. In the LTE system, one DL CC is paired with one UL CC uniquely. For example, in accordance with LTE pairing, DL CC linked with the UL primary CC may be referred to as DL primary CC. This may be regarded as the implicit linkage. The explicit linkage means that the network previously configures a linkage, which may be signaled through RRC. In the explicit linkage, DL CC paired with the UL primary CC may be referred to as primary DL CC. In this case, the UL primary (or anchor) CC may be UL CC through which the PUSCH is transmitted. Also, the UL primary CC may be UL CC to which UCI is transmitted through PUCCH or PUSCH. Also, the DL primary CC may be configured through higher layer signaling. Also, the DL primary CC may be DL CC through which the user equipment has performed initial access. Also, the DL CC except for the DL primary CC may be referred to as DL secondary CC. Similarly, the UL CC except for the UL primary CC may be referred to as UL secondary CC.

DL-UL pairing may correspond to the FDD only. Since the same frequency is used in the TDD system, DL-UL pairing may not be defined separately. Also, DL-UL linkage may be determined from UL linkage through UL EARFCN information of SIB2. For example, DL-UL linkage may be acquired through SIB2 decoding during initial access, and may be acquired through RRC signaling in other cases. Accordingly, only SIB2 linkage exists, and other DL-UL pairing may not be defined explicitly. For example, in 5DL:1UL structure of FIG. 24, DL CC#0 and UL CC#0 are in SIB2 linkage correlation, and the other DL CCs may be in SIB2 linkage correlation with the other UL CCs which are not set for the corresponding user equipment.

The LTE-A system uses a concept of a cell to manage radio resources. The cell is defined by combination of downlink resources and uplink resources, wherein the uplink resources may be defined selectively. Accordingly, the cell may be configured by downlink resources only, or may be configured by downlink resources and uplink resources. If carrier aggregation is supported, linkage between carrier frequency (or DL CC) of the downlink resources and carrier frequency (or UL CC) of the uplink resources may be indicated by system information. A cell operated on the primary frequency resource (or PCC) may be referred to as a primary cell (PCell), and a cell operated on the secondary frequency resource (or SCC) may be referred to as a secondary cell (SCell). The Pcell is used such that the user equipment performs an initial connection establishment procedure or connection re-establishment procedure. The Pcell may refer to a cell indicated during a handover procedure. The SCell may be configured after RRC connection is established, and may be used to provide an additional radio resource. The PCell and the SCell may be referred to as serving cells. Accordingly, although the user equipment is in RRC-CONNECTED state, if it is not set by carrier aggregation or does not support carrier aggregation, a single serving cell configured by the PCell only exists. On the other hand, if the user equipment is in the RRC-CONNECTED state and is set by carrier aggregation, one or more serving cells may exist, wherein the serving cells may include a PCell and one or more SCcells. For carrier aggregation, after an initial security activation procedure starts, the network may configure one or more SCells for the user equipment, which supports carrier aggregation, in addition to a PCell initially configured during a connection establishment procedure.

Accordingly, the PCC corresponds to PCell, primary (radio) resource, and primary frequency resource, and they are used to refer to the same. Similarly, the SCC corresponds to SCell, secondary (radio) resource, and secondary frequency resource, and they are used to refer to the same.

In this specification, although the present invention is partially intended for asymmetric carrier aggregation, this is exemplary for description, and the present invention may be applied to various carrier aggregation scenarios including asymmetric carrier aggregation, without limitation.

**Embodiment: UCI Piggyback in a multi-carrier environment**

Hereinafter, a method for efficiently transmitting uplink control information in a communication system that supports carrier aggregation will be described. In more detail, the present invention suggests a method for determining channel allocation for UCI transmission.

In order to solve Inter-Modulation Distortion/Out-Of-Band (IMD/OOB) radiation problem and perform efficient UCI feedback, the user equipment may transmit a PUCCH and a CA PUCCH through a PCC by defining one UL PCC. In this case, the CA PUCCH may mean a PUCCH which transmits UCI (for example, UL A/N feedback) corresponding to DL CCs. The UL PCC may generally be defined for one CC only in view of the user equipment. However, if the user equipment has a plurality of RF devices (PA, filter), a plurality of UL PCCs may be defined (for example, the number of UL PCCs is determined to correspond to the number of RF devices).

Basically, UCI piggyback has been designed to avoid the status that multiple channels are transmitted at the same time. For example, in the LTE Rel-8/9 system UCI based on DL PUSCH scheduling, especially ACK/NACK or periodic channel status information (CSI) is basically UL-transmitted through the PUCCH. The CSI includes at least one of CQI, PMI and RI. However, if there is PUSCH transmission in a subframe that requires UCI transmission, the user equipment transmits UCI, which will be normally transmitted to PUCCH, through PUSCH piggyback for a corresponding subframe. In other words, if simultaneous transmission of the PUSCH and the PUCCH is required, PUSCH+PUCCH simultaneous transmission is avoided in the corresponding subframe, whereby a cubic metric and IMD problem may be maintained at the same level as that of SC-FDMA transmission. To this end, the user equipment performs a procedure of determining channel allocation for UCI if it should transmit UCI for a subframe n. The user equipment allocates and transmits the UCI to the PUCCH or PUSCH through the channel allocation procedure. The subframe n that requires UCI transmission is determined automatically in accordance with a type of the UCI. For example, if the UCI is ACK/NACK, the subframe n is given as subframe, that has received the PUCCH (or PDSCH),+4. If the UCI is periodic CSI, the subframe n is determined in accordance with period/offset previously given by higher layer signaling. On the other hand, the subframe for PUSCH transmission is dynamically allocated from the network (for example, base station, relay, etc.) by the PDCCH for UL grant.

A similar status occurs even in a carrier aggregation (CA) scenario, and UCI piggyback method based on the status is required. Hereinafter, various methods for piggyback UCI for a PUSCH in accordance with a scheduling scenario of the PUSCH will be described with reference to the drawings. For convenience of description, it is assumed that the PUCCH is transmitted through UL PCC only. Also, 3 UL CCs are configured.

Hereinafter, the embodiments of the present invention may be described independently, or at least two or more methods may be described in combination.

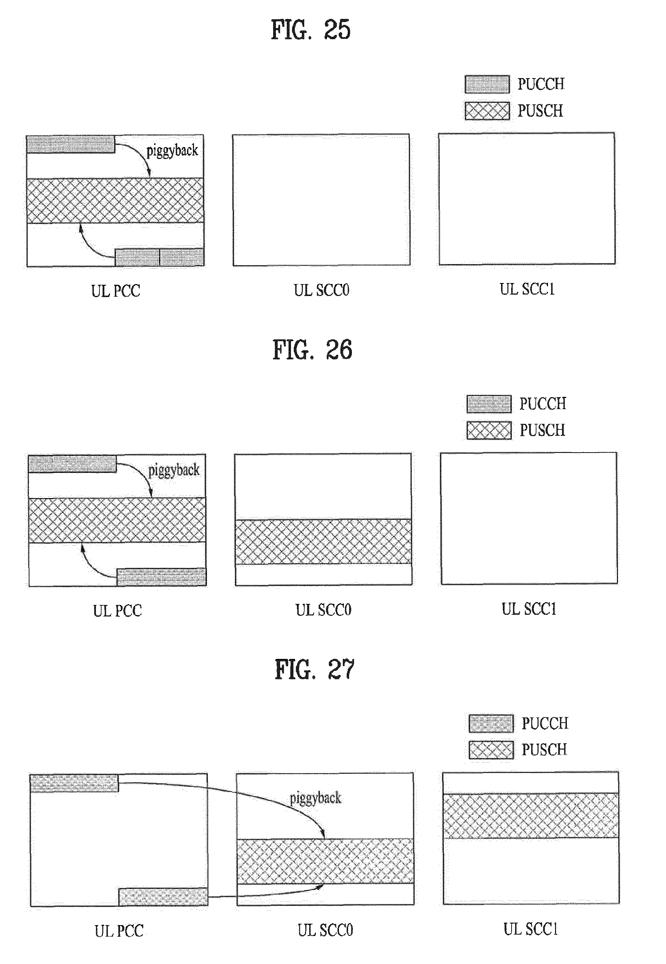

FIG. 25 and FIG. 26 are diagrams illustrating UCI piggyback scenario according to the first embodiment of the present invention. In this embodiment, it is assumed that there is PUSCH transmission for UL PCC. FIG. 25 illustrates that a PUSCH is scheduled for UL PCC only, and FIG. 26 illustrates that PUSCHs are scheduled for UL PCC and UL SCC. In this case, the scheduled PUSCH(s) may include retransmission PUSCH based on HARQ operation. As shown in FIG. 25 and FIG. 26, if at least one PUSCH is scheduled for UL PCC, UCI may be transmitted via PCC PUSCH through piggyback without being transmitted via PCC PUCCH similarly to the method of the LTE Rel-8/9.

Next, FIG. 27 to FIG. 31 illustrate a case where there is no PUSCH scheduled for UL PCC. In this case, the case where there is no PUSCH scheduled for UL PCC may include a case where there no PUSCH transmission (including retransmission based on HARQ operation). If NACK is received from the base station in response to UL initial transmission data (PUSCH), the user equipment may transmit a PUSCH for retransmission even without UL grant in accordance with synchronous non-adaptive HARQ operation. Scheduling information used for initial PUSCH transmission is reused as scheduling information (for example, CC information, resource block allocation information, etc.) of retransmission PUSCH. In other words, the case where the PUSCH is not scheduled may refer to a case where there is no PUSCH to be transmitted, including a case of retransmission. In the meantime, the case where a PUSCH is scheduled may include retransmission PUSCH based on HARQ operation.

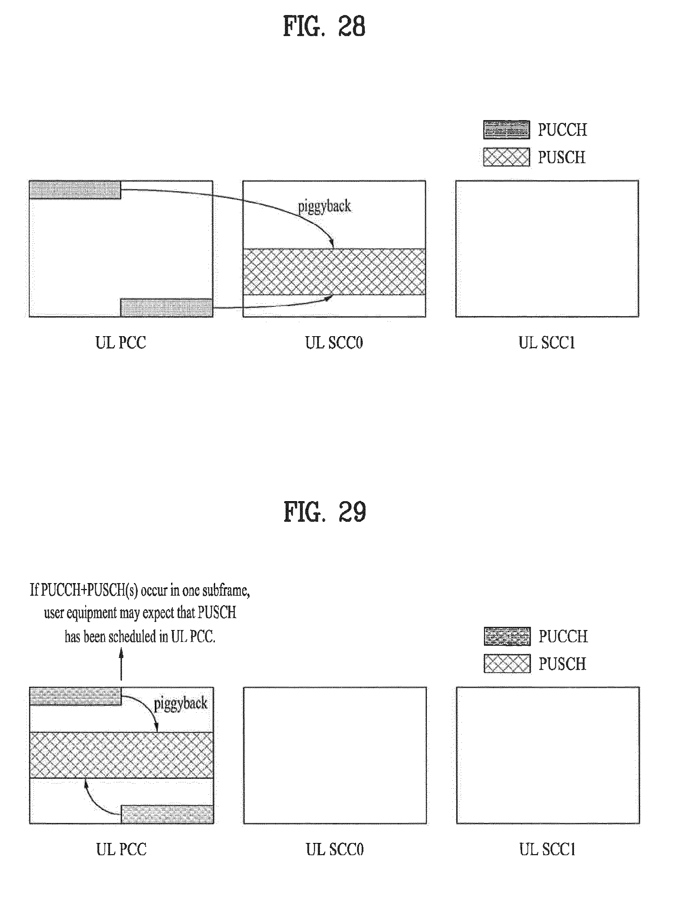

FIG. 27 and FIG. 28 are diagrams illustrating UCI piggyback scenario according to the second embodiment of the present invention. FIG. 27 illustrates that there are PUSCH transmissions for a plurality of SCCs, and FIG. 28 illustrates that there is a PUSCH transmission for one SCC.

According to this embodiment, if there is PUSCH transmission for one or more SCCs, the user equipment may select one of SCCs for which PUSCHs are allocated, and may perform piggyback the PUCCH. In more detail, the PUSC for which UCI piggyback is performed may be determined as follows.

**[0119]** - UCI piggyback may be performed on a PUSCH of SCC having the smallest (or the greatest) physical/logical CC index among scheduled UL SCCs.

**[0120]** - UCI piggyback may be performed on a PUSCH of SCC having the smallest (or the greatest) physical/logical CC index among configured UL SCCs except for UL PCC.

**[0121]** - UCI piggyback may be performed on a PUSCH of SCC having the smallest (or the greatest) physical/logical CC index among activated UL SCCs except for UL PCC.

As described above, the CC corresponds to a cell, a (radio) resource, and a frequency resource, and they may be used to refer to the same. Similarly, the CC index corresponds to a cell index, a (radio) resource index, and a frequency resource index, and they may be used interchangeably. The CC index may be configured through higher layer signaling (for example, RRC signaling), and may be varied.

Referring to FIG. 27 and FIG. 28, in the subframe n, there is no UL PCC PUSCH transmission, and PUSCH initial transmission/retransmission is performed on UL SCC0 (index is assumed as 1) and UL SCC1 (index is assumed as 2). PUSCH retransmission may be performed without UL grant (synchronous non-adaptive retransmission). If the aforementioned "smallest CC index" based method is used, the UCI piggyback may be performed on the PUSCH of UL SCC0 (FIG. 27). If there is no PUSCH transmission on the UL PCC and PUSCH transmission is performed on UL SCC1 only, the UCI piggyback may be performed on UL SCC1, which is the CC having the smallest index, among UL CCs through which the PUSCH is transmitted (FIG. 28).

The following rules may be obtained from FIG. 25 to FIG. 28.

[0125] - If there is UL PCC PUSCH, UCI is piggybacked on UL PCC PUSCH.

[0126] - If there is no UL PCC PUSCH, UCI is piggybacked on a PUSCH of UL SCC having the smallest index among UL SCC(s) for which PUSCH(s) are scheduled.

If the index of the UL PCC is configured to the smallest value, the aforementioned rules may be simplified in such a manner that the UCI piggyback is performed for the PUSCH of the UL CC having the smallest index among the UL CCs for which PUSCHs are scheduled. In other words, it is not required to consider the presence of the UL PCC PUSCH.

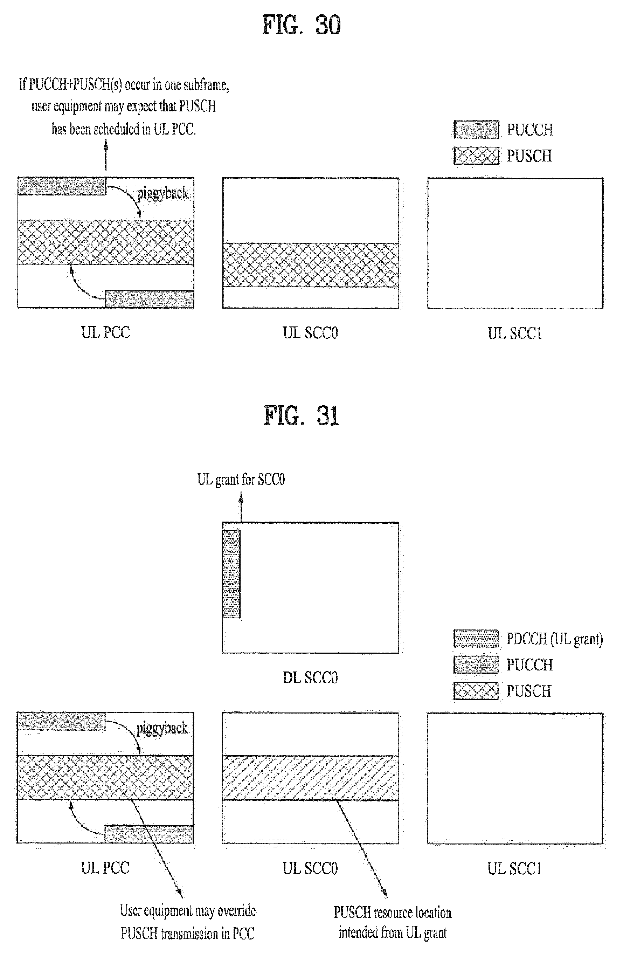

FIG. 29 and FIG. 30 are diagrams illustrating UCI piggyback scenario according to the third embodiment of the present invention. In order to solve the problem occurring when the PUSCH is not scheduled for UL PCC, the network may forcibly schedule at least one PUSCH for UL PCC for the subframe where PUSCH(s) +PUCCH event occurs. At this time, only one PUSCH may be scheduled such that the PUSCH may be scheduled for UL PCC only. In this case, the user equipment may directly recognize the subframe where the PUSCH+PUCCH event occurs, after PDCCH decoding. The corresponding user equipment may recognize that at least one of the PUSCHs is scheduled for the UL PCC. FIG. 29 illustrates that the network forcibly schedules a PUSCH for UL PCC only. FIG. 30 illustrates that the network forcibly schedules at least one PUSCH for UL PCC.

FIG. 31 is a diagram illustrating UCI piggyback scenario according to the fourth embodiment of the present invention. Even in the case that the network does not schedule the PUSCH for the UL PCC (that is, PUSCH is scheduled for UL SCC(s) only), the user equipment may perform UCI piggyback by forcibly overriding UL SCC PUSCH transmission in the UL PCC. Referring to FIG. 31, the user equipment receives UL grant 0 only for UL SCC0 from the network, and does not receive UL grant for UL PCC PUSCH. In this case, the user equipment transmits UL PCC PUSCH by applying resource allocation information of UL grant 0 for DL SCC to the UL PCC. As a result, the UCI is piggybacked on the UL PCC PUSCH.

As another embodiment, the network may notify the user equipment of UL CC index for UCI piggyback through physical layer signaling (for example, PDCCH) or RRC signaling. If the UL CC Index is notified through the PDCCH, the followings may be considered.

Notification through DL grant

[0132] - Implicit indication:

Piggybacked PUSCH may be transmitted on UL CC linked with PDCCH for scheduled DL PDSCH. Alternatively, UCI-piggybacked PUSCH may be transmitted on UL CC linked with scheduled DL PDSCH CC.

[0134] - Explicit indication:

If cross-carrier scheduling is possible (for example, if a carrier indication field (CIF) is included in a PDCCH), UCI-piggybacked PUSCH may be transmitted on UL CC linked with DL CC indicated by the CIF value. If there are many UL CCs linked with a corresponding DL CC (for example, UL heavy scenario), a specific UL CC may be selected. For example, UCI may be piggybacked on PUSCH of UL CC linked with DL CC indicated by the CIF value, and having the smallest (or greatest) CC index among a plurality of UL CCs for which the PUSCH is scheduled.

Also, UL CC on which UCI piggyback will be performed may be indicated by reusing the existing transmit power control (TPC) field or using a newly defined field. The TPC field within DL grant is used for PUCCH power control in the 3GPP Rel-8/9 system.

Notification through UL grant

[0138] - Implicit indication:

Piggybacked PUSCH may be transmitted on UL CC linked with PDCCH for scheduled UL PDSCH. Alternatively, UCI-piggybacked PUSCH may be transmitted on UL CC linked with scheduled UL PDSCH CC.

[0140] - Explicit indication:

If cross-carrier scheduling is possible (for example, if a carrier indication field (CIF) is included in a PDCCH), UCI-piggybacked PUSCH may be transmitted on UL CC indicated by the CIF value.

Also, UL CC on which UCI piggyback will be performed may be indicated by reusing the existing transmit power control (TPC) field or using a newly defined field. The TPC field within UL grant is used for PUSCH power control in the 3GPP Rel-8/9 system.

According to another embodiment, in a state that at least one or more PUSCHs are not scheduled for UL PCC, if PUSCH+UL SCC PUCCH transmission event occurs, the user equipment may drop one of UCI transmission and UL SCC PUSCH transmission. Drop may be defined previously in accordance with a priority order, or drop/non-drop or a channel to be dropped may be indicated through PDCCH or RRC signaling.

[0144] - PUSCH drop: PUCCH transmission may only be performed without UL SCC PUSCH transmission. UL SCC PUSCH drop may be applied in a CC level. In other words, PUSCH transmission may be dropped for some UL SCC, and PUSCH trans mission may be performed for any other UL SCC.

[0145] - PUCCH drop: PUSCH transmission may only be performed without UCI piggyback.

In the meantime, in the 3GPP Rel-10 carrier aggregation (CA), HARQ entity performs HARQ operation in a unit of CC level. For example, if initial transmission has been performed through UL CC#2, its retransmission should be performed through UL CC#2.

For example, the following cases are assumed.

[0148] - Initial transmission through UL PCC, UL SCC#0 and UL SCC#1.

[0149] - Data decoding is successfully performed through UL PCC and UL SCC#0, whereby the network (for example, base station, relay) transmits ACK to the user equipment through PHICH.

**[0150]** - Data decoding is failed through UL SCC#1, whereby the network transmits NACK to the user equipment through PHICH, and the user equipment retransmits PUSCH#1 through UL SCC#1.

Under the aforementioned assumption, according to another embodiment of the present invention, if UCI transmission is required for a subframe where UL SCC#1 PUSCH is retransmitted, the network may indicate UL CC through which UCI piggyback is performed, through UL grant.

For example, the following cases are assumed again.

**[0153]** - Initial transmission through UL PCC, UL SCC#0 and UL SCC#1.

**[0154]** - Data decoding is successfully performed through UL PCC, whereby the network (for example, base station, relay) transmits ACK to the user equipment through PHICH.

**[0155]** - Data decoding is failed through UL SCC#0 and UL SCC#1, whereby the network transmits NACK to the user equipment through PHICH, and the user equipment retransmits PUSCH#0 and PUSCH#1 through UL SCC#0 and UL SCC#1.

At this time, the network may transmit UL grant to indicate UL CC through which UCI piggyback will be performed. The user equipment may perform UCI piggyback on the PUSCH of UL SCC corresponding to UL grant. For example, the network may transmit UL grant for UL SCC#0, and the user equipment may perform UCI piggyback on UL SCC#0.

At this time, UL grant (PDCCH) for UL SCC#0 may be transmitted on DL CC (or DL SCC) linked with UL SCC#0. In other words, UL SCC on which UCI piggyback is performed may be indicated indirectly through DL CC through which the UL grant is transmitted. Alternatively, if cross-carrier scheduling is configured, the UL grant (PDCCH) may indicate UL SCC#0 by using the CIF.

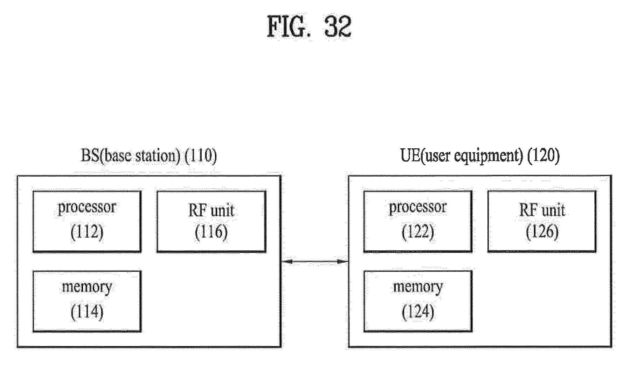

FIG. 32 is a diagram illustrating a base station and a user equipment, which may be applied to one embodiment of the present invention. In case of a relay system, a base station-user equipment block diagram may be replaced with a base station-relay block diagram or relay-user equipment block diagram.

Referring to FIG. 32, the wireless communication system includes a base station (BS) 110 and a user equipment (UE) 120. The base station 110 includes a processor 112, a memory 114, and a radio frequency (RF) unit 116. The processor 112 may be configured to implement procedures and/or methods suggested in the present invention. The memory 114 is connected with the processor 112 and stores various kinds of information related to the operation of the processor 112. The RF unit 116 is connected with the processor 112 and transmits and/or receives a radio signal. The user equipment 120 includes a processor 122, a memory 124, and a radio frequency (RF) unit 126. The processor 122 may be configured to implement procedures and/or methods suggested in the present invention. The memory 124 is connected with the processor 122 and stores various kinds of information related to the operation of the processor 122. The RF unit 126 is connected with the processor 122 and transmits and/or receives a radio signal. The base station 110 and/or the user equipment 120 may have a single antenna or multiple antennas.

The aforementioned embodiments are achieved by combination of structural elements and features of the present invention in a predetermined type. Each of the structural elements or features should be considered selectively unless specified separately. Each of the structural elements or features may be carried out without being combined with other structural elements or features. Also, some structural elements and/or features may be combined with one another to constitute the embodiments of the present invention. The order of operations described in the embodiments of the present invention may be changed. Some structural elements or features of one embodiment may be included in another embodiment, or may be replaced with corresponding structural elements or features of another embodiment. Moreover, it will be apparent that some claims referring to specific claims may be combined with another claims referring to the other claims other than the specific claims to constitute the embodiment or add new claims by means of amendment after the application is filed.

The embodiments of the present invention have been described based on the data transmission and reception between the base station and the user equipment. A specific operation which has been described as being performed by the base station may be performed by an upper node of the base station as the case may be. In other words, it will be apparent that various operations performed for communication with the user equipment in the network which includes a plurality of network nodes along with the base station may be performed by the base station or network nodes other than the base station. The base station may be replaced with terms such as a fixed station, Node B, eNode B (eNB), and access point. Also, the user equipment may be replaced with terms such as mobile station (MS) and mobile subscriber station (MSS).

The embodiments according to the present invention may be implemented by various means, for example, hardware, firmware, software, or their combination. If the embodiment according to the present invention is implemented by hardware, the embodiment of the present invention may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

If the embodiment according to the present invention is implemented by firmware or software, the embodiment of the present invention may be implemented by a type of a module, a procedure, or a function, which performs functions or operations described as above. A software code may be stored in a memory unit and then may be driven by a processor. The memory unit may be located inside or outside the processor to transmit and receive data to and from the processor through various means which are well known.

It will be apparent to those skilled in the art that the present invention may be embodied in other specific forms without departing from the spirit and essential characteristics of the invention. Thus, the above embodiments are to be considered in all respects as illustrative and not restrictive. The scope of the invention should be determined by reasonable interpretation of the appended claims and all change which comes within the equivalent scope of the invention are included in the scope of the invention.

**INDUSTRIAL APPLICABILITY**

The present invention may be used for a user equipment, a base station or other equipment of a wireless communication system. In more detail, the present invention may be applied to a method for transmitting uplink control information and an apparatus for the same.

**Claims**

1. A method for transmitting control information by a user equipment in a wireless communication system, the method comprising:

    receiving a plurality of scheduling information for transmission of a plurality of physical uplink shared channels (PUSCHs); and
    transmitting uplink control information (UCI) through one PUSCH among the plurality of PUSCHs, if the transmission of the plurality of PUSCHs is present in a subframe which requires UCI transmission,
    wherein, if there is a PUSCH transmission on a primary resource in the subframe, the UCI is transmitted through the PUSCH of the primary resource, and
    wherein, if there is no PUSCH transmission on the primary resource in the subframe, the UCI is transmitted through the PUSCH of the secondary resource having the smallest index among a plurality of secondary resources on which PUSCH transmissions are present.

2. The method of claim 1, wherein the primary resource corresponds to a primary component carrier (PCC), and the secondary resource corresponds to a secondary component carrier (SCC).

3. The method of claim 1, wherein the UCI includes at least one of periodic channel status information (CSI) and acknowledgement/negative acknowledgement (ACK/NACK).

4. The method of claim 1, wherein the index is a logical index used for CC identification, and is configured through radio resource control (RRC) signaling.

5. The method of claim 1, further comprising:

    transmitting the UCI through a physical uplink control channel (PUCCH) if the subframe, which requires the UCI transmission, is different from the subframe where the transmission of the plurality of PUSCHs is present.

6. A user equipment configured to transmit control information in a wireless communication system, the user equipment comprising:

    a radio frequency (RF) unit; and
    a processor,
    wherein the processor configured to receive a plurality of scheduling information for transmission of a plurality of physical uplink shared channels (PUSCHs), and transmit uplink control information (UCI) through one PUSCH among the plurality of PUSCHs, if the transmission of the plurality of PUSCHs is present in a subframe which requires UCI transmission,
    wherein, if there is a PUSCH transmission on a primary resource in the subframe, the UCI is transmitted through the PUSCH of the primary resource, and
    wherein, if there is no PUSCH transmission on the primary resource in the subframe, the UCI is transmitted through the PUSCH of the secondary resource having the smallest index among a plurality of secondary resources on which PUSCH transmissions are present.

7. The user equipment of claim 6, wherein the primary resource corresponds to a primary component carrier (PCC), and the secondary resource corresponds to a secondary component carrier (SCC).

8. The user equipment of claim 6, wherein the UCI includes at least one of periodic channel status information (CSI) an acknowledgement/negative acknowledgement (ACK/NACK).

9. The user equipment of claim 6, wherein the index is a logical index use for CC identification, and is configured through radio resource control (RRC) signaling.

10. The user equipment of claim 6, configured to transmit the UCI through a physical uplink control channel (PUCCH) if the subframe, which requires the UCI transmission, is different from the subframe where the transmission of the plurality of PUSCHs is present.

# FIG. 1

initial cell search | system information reception | random access procedure | general DL/UL Tx/Rx

| P/S - SCH & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S101　S102　S103　S104　S105　S106　S107　S108

• DL/UL ACK/NACK
• report of UE CQI, PMI, and RANK usingon PUSCH and PUCCH

FIG. 2

```
      201           202           203            204             205
   ┌──────────┐  ┌──────────┐  ┌──────────┐  ┌──────────────┐  ┌──────────────┐
──▶│scrambling│─▶│modulation│─▶│ transform│─▶│   resource   │─▶│   SC-FDMA    │──▶
   │  module  │  │  mapper  │  │ precoder │  │element mapper│  │signal generator│
   └──────────┘  └──────────┘  └──────────┘  └──────────────┘  └──────────────┘
```

# FIG. 3

## FIG. 4

• CP: 순환 전치
• PS: 펄스 쉐이핑
• M > N

subcarrier mapping

$\{x_0, x_1 ..., x_{N-1}\}$ one block → **serial-to-parallel converter** (401) → **N-point DFT module** (402) $\{X_k\}$ → **subcarrier** (403) $\{\tilde{x}_t\}$ → **M-point IDFT module** (404) $\{\tilde{x}_m\}$ → **parallel-to-serial converter** (405) → **CP attachment** (406) → $\{\tilde{x}_0, \tilde{x}_1 ..., \tilde{x}_{M-1}\}$ one block

SC - FDMA: ☐ + ▨

OFDMA: ☐

# FIG. 5

(a)

(b)

# FIG. 6

one component carrier (eg.20MHz BW chunk)

ex.) localized mapping within one sub-block

frequency domain mapping

modulation symbol → DFT → DFT output

sub-block #0
sub-block #1
sub-block #2
sub-block #3

sub-block #0
sub-block #1
sub-block #2
sub-block #Nsb-1

IFFT

clustered-DFT scheme

EP 2 579 491 A2

# FIG. 7

## FIG. 8

## FIG. 9

EP 2 579 491 A2

# FIG. 10

# FIG. 11

$a_0, a_1, \ldots, a_{A-1}$

┌─────────────────────────────────┐
│ transport block CRC attachment  │ ── S100
└─────────────────────────────────┘

$b_0, b_1, \ldots, b_{B-1}$

┌─────────────────────────────────┐
│ code block segmentation         │ ── S110
│ code block CRC attachment       │
└─────────────────────────────────┘

$c_{r0}, c_{r1}, \ldots, c_{r(K_r-1)}$

┌─────────────────────────────────┐
│ channel coding                  │ ── S120
└─────────────────────────────────┘

$d_{r0}^{(i)}, d_{r1}^{(i)}, \ldots, d_{r(D_r-1)}^{(i)}$

┌─────────────────────────────────┐
│ rate matching                   │ ── S130
└─────────────────────────────────┘

$[o_0^{ACK}] \text{or} [o_1^{ACK} \, o_1^{ACK}] \text{or}$
$[o_0^{ACK} \, o_1^{ACK} \ldots o_{0^{ACK}-1}^{ACK}]$

$[o_0^{RI}] \text{or} [o_0^{RI} \, o_1^{RI}]$

$o_0, o_1, \ldots, o_{0-1}$

$e_{r0}, e_{r1}, \ldots, e_{r(E_r-1)}$

| S140 | S150 | S160 | S170 |
|---|---|---|---|

┌──────────────────────┐  ┌──────────┐  ┌──────────┐  ┌──────────┐
│ code block           │  │ channel  │  │ channel  │  │ channel  │
│ concatenation        │  │ coding   │  │ coding   │  │ coding   │
└──────────────────────┘  └──────────┘  └──────────┘  └──────────┘

$q_0, q_1, \ldots, q_{Q_{CQI}-1}$    $q_0^{RI}, q_1^{RI}, \ldots, q_{Q_{RI}-1}^{RI}$

$f_0, f_1, \ldots, f_{G-1}$

$[q_0^{ACK}, q_1^{ACK} \ldots q_{Q_{ACK}-1}^{ACK}]$

┌─────────────────────────────────┐
│ data and control multiplexing   │
└─────────────────────────────────┘
S180

$g_0, g_1, \ldots, g_{H-1}$

S190

┌─────────────────────────────────────────────────────────┐
│ channel interleaver                                       │
└─────────────────────────────────────────────────────────┘

$h_0, h_1, \ldots, h_{H+Q_{RI}-1}$

# FIG. 12

# FIG. 13

recognition of n_sch for UL-SCH rank and related PMI — S1310

determination of UCI rank (n_ctrl) (for example, n_ctrl=n_sch) — S1320

multiplex data and control channel — S1330

channel interleaving — S1340

channel interleaving — S1350

# FIG. 14

EP 2 579 491 A2

# FIG. 15

# FIG. 16

EP 2 579 491 A2

# FIG. 17

# FIG. 18

| MAC |
|-----|

dynamic/static mapping

| PHY 0 (carrier 0) | PHY 1 (carrier 1) | PHY n-2 (carrier n-2) | PHY n-1 (carrier n-1) |
|---|---|---|---|

# FIG. 19

| PHY 0 (carrier 0) | PHY 1 (carrier 1) | PHY n-2 (carrier n-2) | PHY n-1 (carrier n-1) |
|---|---|---|---|

dynamic/static de-mapping

| MAC |
|-----|

# FIG. 20

| MAC | MAC | MAC | MAC |
|---|---|---|---|

dynamic/static mapping

| PHY 0 (carrier 0) | PHY 1 (carrier 1) | PHY n-2 (carrier n-2) | PHY n-1 (carrier n-1) |
|---|---|---|---|

# FIG. 21

# FIG. 22

# FIG. 23

FIG. 24

DL CC#0 (for example, primary DL CC)

DL CC#1

DL CC#2

DL CC#3

DL CC#4

UL CC#0 (for example, anchor UL CC) -> UCI bits for DL CCs may be transmitted via anchor UL CC

# FIG. 25

PUCCH
PUSCH

UL PCC     UL SCC0     UL SCC1

*piggyback*

# FIG. 26

PUCCH
PUSCH

UL PCC     UL SCC0     UL SCC1

*piggyback*

# FIG. 27

PUCCH
PUSCH

UL PCC     UL SCC0     UL SCC1

*piggyback*

# FIG. 28

PUCCH
PUSCH

piggyback

UL PCC          UL SCC0          UL SCC1

# FIG. 29

If PUCCH+PUSCH(s) occur in one subframe,
user equipment may expect that PUSCH
has been scheduled in UL PCC.

PUCCH
PUSCH

piggyback

UL PCC          UL SCC0          UL SCC1

# FIG. 30

If PUCCH+PUSCH(s) occur in one subframe,
user equipment may expect that PUSCH
has been scheduled in UL PCC.

□ PUCCH
▨ PUSCH

piggyback

UL PCC            UL SCC0            UL SCC1

# FIG. 31

UL grant for SCC0

DL SCC0

▨ PDCCH (UL grant)
□ PUCCH
▨ PUSCH

piggyback

UL PCC            UL SCC0            UL SCC1

User equipment may override          PUSCH resource location
PUSCH transmission in PCC            intended from UL grant

FIG. 32

BS(base station) (110)

processor (112)

RF unit (116)

memory (114)

UE(user equipment) (120)

processor (122)

RF unit (126)

memory (124)